# EUROPEAN PATENT APPLICATION

(11) **EP 1 591 253 A2**
(43) Date of publication of application: **02.11.2005**
(21) Application number: 05006954.1
(22) Date of filing: 30.03.2005
(51) Int. Cl.: B41J 2/16

(54) **Micromachining methods and systems**

(30) Priority: 26.04.2004 US 832030
(71) Applicant: Hewlett-Packard Development Company, L.P., Houston, TX 77070 (US)
(72) Inventor: Buswell, Shen, Monmouth, OR 97361 (US)
(74) Representative: Schoppe, Fritz

(57) **Abstract**

A method of forming fluid handling slots in a semiconductor substrate having a thickness defined by a first side and a second side is provided. The method comprises ultrasonic grinding, utilizing an abrasive material, into the semiconductor substrate from a first side to form a first trench, and removing semiconductor substrate material from the backside to form a second trench, wherein at least a portion of the first and second trenches intersect to form a feature through the semiconductor substrate.

## Description

### BACKGROUND

The market for electronic devices continually demands increased performance at decreased costs. In order to meet these requirements the components which comprise various electronic devices may be made more efficiently and to closer tolerances.

It is desired that formation of such devices include features, such as slots formed in the in fluid ejection devices. The formation of features in substrates creates a need for processes that are fast, do not damage the substrate in which the features are being formed, and are as low cost as possible.

### BRIEF DESCRIPTION OF THE DRAWINGS

Features of the invention will readily be appreciated by persons skilled in the art from the following detailed description of exemplary embodiments thereof, as illustrated in the accompanying drawings, in which:

Fig. 1 illustrates a perspective view of one embodiment of a printhead.

Fig. 2 illustrates a cross-sectional view of an embodiment of the printhead of Fig. 1.

Fig. 3 illustrates a perspective view of the printhead of Fig. 1.

Figs. 4A-4C illustrate a process of forming a feature in silicon substrate according to one embodiment.

Figs. 5A-5F illustrate a process of forming a feature according other embodiments.

Figs. 6A-6D illustrate a process of forming a feature according further embodiments.

Fig. 7 illustrates an ultrasonic grinding machine according to one embodiment.

Fig. 8 illustrates a portion of an ultrasonic grinding machine according to another embodiment.

Figs. 9A-9E illustrate profiles of tools that may be utilized with an ultrasonic grinding machine according to one embodiment.

Figs. 10A-10D illustrate cross-sectional views of through features that may be manufactured using the processes described herein according to several embodiments.

Figs. 11A-11F illustrate a process of forming a feature according to yet additional embodiments.

Figs. 12A-12C illustrate a process of forming a feature according to yet further embodiments.

Fig. 13 illustrates a perspective view of an embodiment of a printer.

Fig. 14 illustrates a perspective view of an embodiment of a print cartridge.

### DETAILED DESCRIPTION OF THE PREFERRED EMBODIMENTS

The embodiments described below pertain to methods and systems for laser micromachining a substrate. Micromachining is a production method for controlled, selective removal of substrate material. By removing substrate material, laser micromachining can form a feature, having desired dimensions, into the substrate. Such features can be either through features, such as a slot, which pass through a substrate's thickness or at least two surfaces of the substrate, or blind features, such as a trench, which pass through a portion of the substrate's thickness or one surface of the substrate.

Examples of machining features will be described generally in the context of forming ink feed slots ("slots") in a substrate. Such slotted substrates can be incorporated into ink jet print cartridges or pens, and/or various micro electro mechanical systems (MEMS) devices, among other uses. The various components described below may not be illustrated accurately as far as their size is concerned. Rather, the included figures are intended as diagrammatic representations to illustrate various inventive principles that are described herein.

Examples of particular feature size, shape, and arrangement are depicted herein. However, any type of feature size and geometry may be fabricated using the inventive methods and apparatuses described herein.

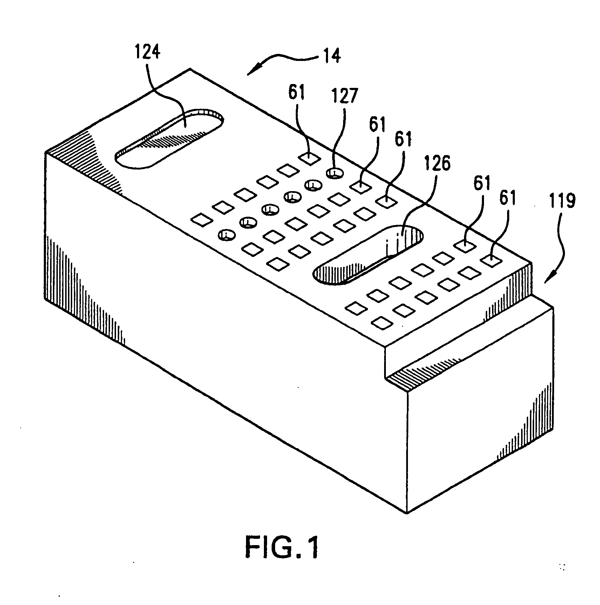

Fig. 1 illustrates an enlarged view of one embodiment of the printhead 14 in perspective view. The printhead 14 in this embodiment has multiple features, including an edge step 120 for an edge fluid feed to resistors (or fluid ejectors) 61. The printhead may also have a trench 124 that is partially formed into the substrate surface. A slot (or channel) 126 to feed fluid to resistors 61, and/or a series of holes 127 feeding fluid to resistors 61 are also shown on this printhead, each being formed by a UV laser machining process as described herein. In one embodiment there may be at least two of the features described on the printhead 14 in Fig. 1. For example, only the feed holes 127 and the slot 126 are formed in the printhead 14, where in an alternative embodiment the edge step 119 and/or the trench 124 are formed as well. In another example, the edge step 120, and the slot 126 are formed in the printhead 14, where in an alternative embodiment the trench 124 and/or the feedholes 127 are formed as well.

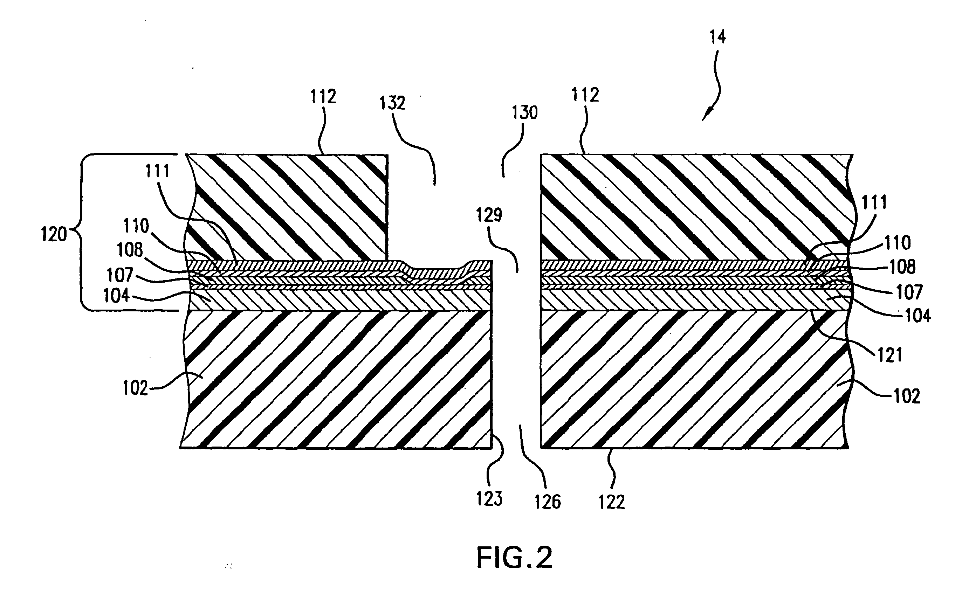

Fig. 2 illustrates a cross-sectional view of the printhead 14 of Fig. 1 where the slot 126 having slot (or side) walls 123 is formed through a substrate 102. The formation of the slot through a slot region (or slot area) in the substrate is described in more detail below. In another embodiment, multiple slots are formed in a given die. For example, the inter slot spacing or spacing between adjacent slots in the die or substrate are as low as 10 microns. (In an embodiment, 10 microns is just over twice the extent of a heat affected zone for each slot, where the heat affected zone is the area along the slot walls that is affected by the laser machining described in this application.)

In Fig. 2, thin film layers (or active layers, a thin film stack, electrically conductive layers, or layers with micro-electronics) 120 are formed, e.g. deposited, on a front or first side (or surface) 121 of the substrate 102. The first side 121 of the substrate is opposite a second side (or surface) 172 of the substrate 102. The thin film stack 120 includes at least one layer formed on the substrate, and, in a particular embodiment, masks at least a portion of the first side 121 of the substrate 102. Alternatively or additionally, the layer 120 electrically insulates at least a portion of the first side 121 of the substrate 102.

As shown in the embodiment of the printhead shown in Fig. 2, the thin film stack 120 includes a capping layer 104, a resistive layer 107, a conductive layer 108, a passivation layer 110, a cavitation barrier layer 111, and a barrier layer 112, each formed or deposited over the first side 121 of the substrate 102 and/or the previous layer(s). In one embodiment, the substrate 102 is silicon. In various embodiments, the substrate may be one of the following: single crystalline silicon, polycrystalline silicon, gallium arsenide, glass, silica, ceramics, or a semiconductor material. The various materials listed as possible substrate materials are not necessarily interchangeable and are selected depending upon the application for which they are to be used. In this embodiment, the thin film layers are patterned and etched, as appropriate, to form the resistors 61 in the resistive layer, conductive traces of the conductive layer, and a firing chamber 130 at least in part defined by the barrier layer. In a particular embodiment, the barrier layer 112 defines the firing chamber 130 where fluid is heated by the corresponding resistor and defines a nozzle orifice 132 through which the heated fluid is ejected. In another embodiment, an orifice layer (not shown) having the orifices 132 is applied over the barrier layer 112. Other structures and layouts of layers and components may be utilized as is know in the art.

In the embodiment shown in Fig. 2, a channel 129 is formed through the layers (120) formed upon the substrate. The channel 129 fluidically couples the firing chamber 130 and the slot 126, such that fluid flows through the slot 126 and into the firing chamber 130 via channel 129. In the particular embodiment shown, the channel entrance 129 for the fluid is not in the center of the slot 126. However, the slotted substrate is formed as described herein substantially the same whether the entrance 129 is centrally located or off-center.

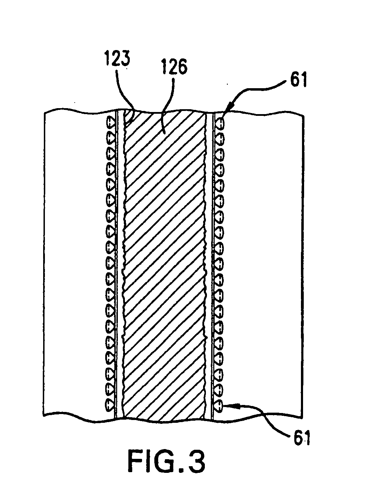

In the embodiment illustrated in Fig. 3 a perspective view of the printhead 14 and its slot 126 is shown without the barrier layer 112. As shown in the embodiment of Fig. 3, the resistors 61 are along the slot 126. Often, the slot wall 123 has striations (or vertical lines), and a rough area (or breakthrough area) near the middle of the slot 126 formed by various slotting processes. This rough area is formed by a breakthrough near the middle of the slot 126. The bending moment is minimized at this mid-slot location compared with a slot surface location, and therefore there is less stress on the breakthrough-rough area during processing. As a result, cracking is minimized at the breakthrough-rough area, and thus throughout the substrate 102.

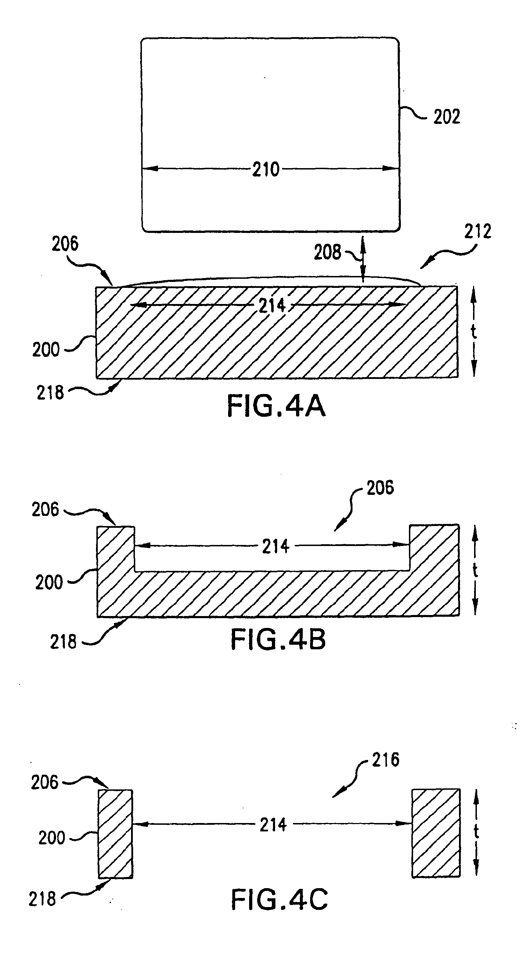

Referring to Figs. 4A-4C, illustrate a process of forming a feature in a silicon substrate 200 according to one embodiment. The illustrated silicon substrate 200 has a thickness t. The described embodiments can work satisfactorily with various thicknesses of substrate. For example, in certain embodiments, the thickness can range from less than about 100 microns to at least about 2000 microns. Other embodiments can be outside of this range. The thickness of the substrate in further embodiments can be about 675 microns.

A tool 202 is positioned a distance 208 from a first surface 206 of silicon substrate 200. In certain embodiments, distance 208 varies from between 25 to 100 microns. In other embodiments, distance 208 can be less than 25 microns. Tool 202 has a width 210, which can also be a length, that it utilized to define a dimension or area of a feature, e.g. a slot, formed in silicon substrate 200. Tool 202 is formed of a metal or metal alloy material. In certain embodiments, tool 202 comprises titanium, low-carbon, or stainless steel.

A slurry 212 which includes abrasive materials is then applied to the surface first surface 206 of silicon substrate 200. The slurry may be applied to the entirety of first surface 206 or only to portions where a feature or features are being formed. In certain embodiment, the slurry 212 comprises aluminum oxide, silicon carbide, diamonds or boron carbide.

Tool 202 is then vibrated, in a motion that is substantially perpendicular to first surface 206, at a rate of between 19 and 25 kHz as the slurry is being provided and with an amplitude of between 13 to 63 microns. In other embodiments, the frequency and amplitude may be varied as needed.

In Fig. 4B, as tool 202 is vibrated slurry 212 is propelled into first surface 206 forming a feature 214 that has a profile that is substantially an inverse of the profile of tool 202. It also can be seen that a width 214, which can also be a length, of feature 216 is slightly larger than width 210 of tool 202. In certain embodiments, the width 214 is less than 10 microns greater than width 210.

In certain embodiments, material is removed at a rate of approximately 2.8 microns per second. In such embodiments, a feature through a second surface 218 of a substrate from first surface 206 can be formed in approximately 4 minutes where the thickness of the substrate is approximately 675 microns.

As shown in Fig. 4C, feature 216 is formed through both first surface 206 and second surface 218. This feature, though depicted as a through feature can be a blind feature that is through first surface 206 but not second surface 218.

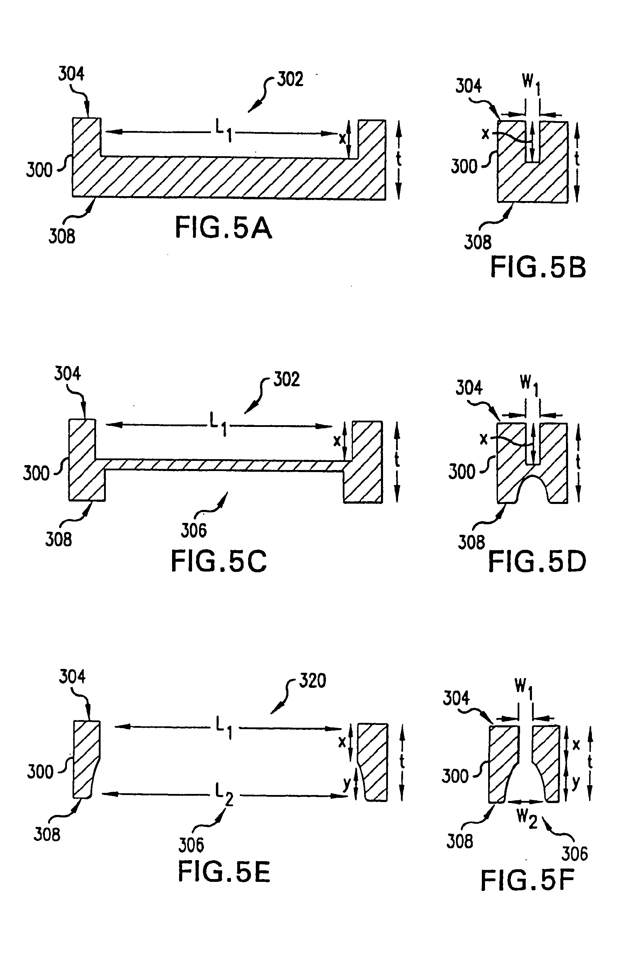

Referring to Figs. 5A-5F a process of forming a feature according to another embodiment is illustrated. A through feature can comprise a first trench 302 that originates from a first side 304 of the substrate 300, and a second trench 306 (shown Fig. 5C) that originates from the second side 308. For ease of viewing these trenches, are shown in corresponding pairs. For example, Fig. 5A is a portion of a cross-section of a feature, and shows a length L₁ and depth x of the first trench. Fig. 5B is a portion of a cross section substantially orthogonal to the view shown in Fig. 5A and shows a width w₁ of the trench 302 and the same depth x shown in Fig. 5A of the first trench 302.

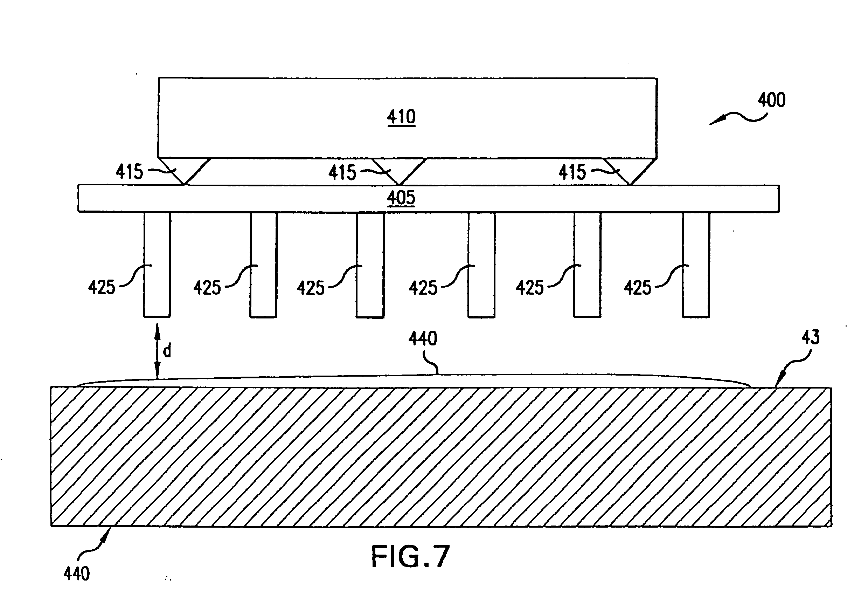

The first trench 302 may be formed by an ultrasonic grinding process, one embodiment of which is depicted in Figs. 4A-4C. A tool and machine to create trench 302 is depicted and described with respect to Fig. 7.

In the embodiment illustrated in Fig. 5A, trench 302 extends through approximately 50 percent of the thickness of the substrate 300 as indicated by the depth x. In embodiments where substrate 300 has a depth, between first side 304 and second side 308, of about 675 microns and depth x is about at least 335 microns.

In the illustrated embodiments, the length L₁ lies along a first axis of the trench and the width lies along second axis, transverse the first axis. Figs. 5C and 5D and Figs. 5E and 5F have similar relationships to Figs. 5A and 5B showing corresponding cross sections of the length and width.

Fig. 5C shows a partially completed second trench 306 that is formed from the second side 308. In various embodiments, second trench 306 can be formed by removing substrate material through the second surface 308. In this example, reactant ion etching, which is one type of wet etching, can be used to form the second trench 306.

Other techniques for creating second trench 306 includes sand drilling which is a mechanical cutting process where target material is removed by particles, such as aluminum oxide, delivered from a high pressure air flow system. Other embodiments may use one or more of the following techniques to form the second trench: wet etching, dry etching, laser machining, sand drilling, abrasive jet machining, and mechanical machining, ultrasonic abrasive grinding and others. Mechanical machining can include the use of various saws and drills that spin and vibrate that are commonly used to remove substrate material.

Figs. 5E-5F show a finished second trench 306 having a length L₂, a width w₂ and a depth y. The trench intercepts or otherwise joins with a portion of the first trench. The combination of the two trenches forms a slot 320 that extends through the thickness of the substrate and through which a fluid such as fluid can flow. So for at least a portion of the substrate, the depths (x and y) of the two trenches, when taken together, equal the thickness t. As shown in this exemplary embodiment and as best viewed in Fig. 5E, the second trench intercepts the entire length L₂ of the first trench. Other exemplary embodiments can have less than the entirety of the length of the first trench intercepted by the second trench. Additionally, as can be appreciated from Fig. 5E, the second trench can be longer than the first trench so that it encompasses a portion of the first trench for its entire length within the second trench.

The exemplary embodiment, shown in Fig. 5F, has a slot 320 formed from a first trench 302 having generally planar side walls and a second trench 306 having generally concave side walls. In this exemplary embodiment, the maximum width W₂ of the first trench is less than the maximum width W₂ of the second trench. Other embodiments can utilize different configurations.

Although the described embodiments illustrate only removing material from the substrate to form the desired trenches, intermediate steps in some embodiments can actually add material to the substrate. For example, materials might be deposited, through deposition techniques, as part of the slot formation sequence and then be either partially or completely removed.

Another additional procedure, such as reactive ion etching, can be utilized to polish the slot wall surface and further release residue stresses to strengthen the substrate 300 after both first trench 302 and second trench 306 are formed. In addition, this wet etch process can be utilize to taper the edges of the feature at second surface 308 in order to reduce the likelihood of chipping and potential blockage of the slot or portions thereof.

Alternative approaches to forming first trench 302 include applying wet etch on first side 304 prior to ultrasonic grinding and forming first trench by applying a wet etch, whereby second trench 306 is formed by ultrasonic grinding. Such approaches produce edges for first trench 302 that can have a minimized risk of chipping. Another approach may include applying a wet etch on second side 308 followed by ultrasonic from either first side 304 or second side 308 to fully form feature 320. This approach produces a tapered trench on second side 308 to make substrate 300 more flexible and easier to bend toward first side 304 without cracking the substrate 300 or a film formed on the substrate 300.

Another approach is to apply ultrasonic abrasive grinding (USIG) to form 306 and then wet etch to form 302 to produce feature 320. This approach gives flexibility in the event that work piece does not allow mechanical access on first side 304, e.g. if a thin film structure with small holes is formed thereon. In this way, ultrasonic grinding can be used to remove bulk material from second side 308 and first side to form the feature 320.

In embodiments where second trench 306 is formed by dry etching, first trench 302 is formed as described with respect to Figs. 5A-5D such that depth x is approximately 90% of the total thickness t of substrate 300. Then a dry etching process may be utilized to create second trench 306.

In embodiments where second trench 306 is formed by laser machining, sand drilling, abrasive jet machining, or mechanical machining: the ultrasonic abrasive grinding can be utilized to form first trench 302 (Not sure what this means?)

A further approach may include applying a wet etch on first side 304 or second side 308 or both to define trenches, that have a lesser depth than those of trenches 302 and second trench 306, and then ultrasonic grinding through either of the trenches from either side to form a through feature. This will produce an optical front edge and tapered slot walls on either one side or both sides of 304 and 308.

An advantage of the processes described with respect to Figs. 4A-4C and 5A-5F is that a quicker processes can be utilized to remove the bulk of the material, e.g. more than 50%, while more precise and more expensive processes, e.g. dry or wet etching, may be utilized to remove less material while giving the feature a more precise aspect ratio, dimensional tolerances while retain the strength of the work piece, e.g. silicon wafer..

It should be noted that while Figs. 5A-5F refer to a first trench 302 and a second trench 306 the order of the manufacturing of the trenches need not follow this approach. Further, both first side 304 and second side 308 can have integrated circuits or other devices formed on the surface prior to formation of first trench 302 and second trench 306.

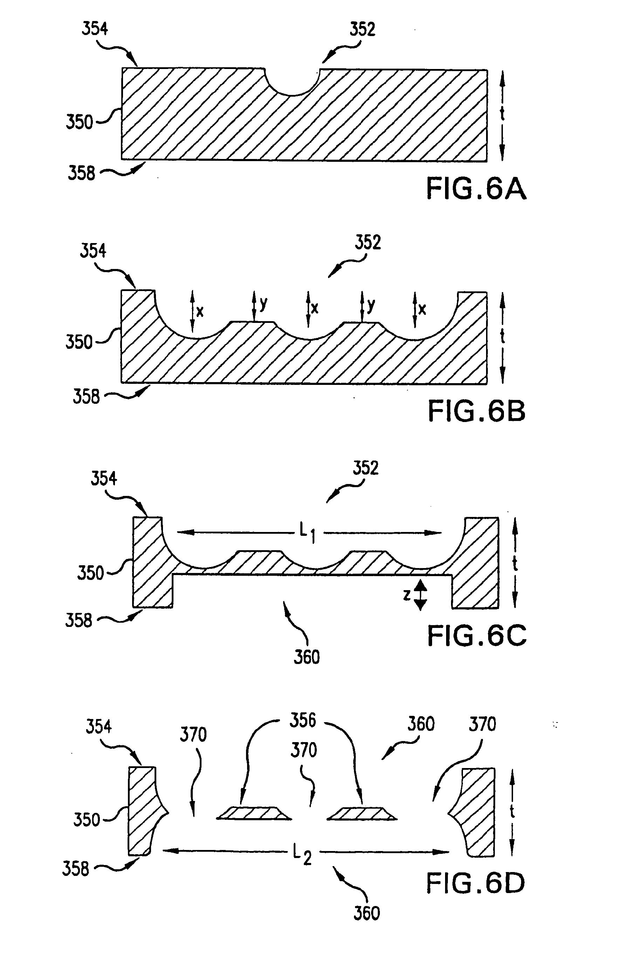

Referring to Figs. 6A-6D a process of forming a feature according further embodiments is illustrated. In Figs. 6A-6D, a through feature 360 having one or more ribs 365 is formed A through feature 360 can comprise a first trench 352 that originates from a first side 354 of the substrate 350, and a second trench 356 (shown Fig. 6D) that originates from the second side 358. In these embodiments, ribs 365 are formed during the formation of first trench 352.

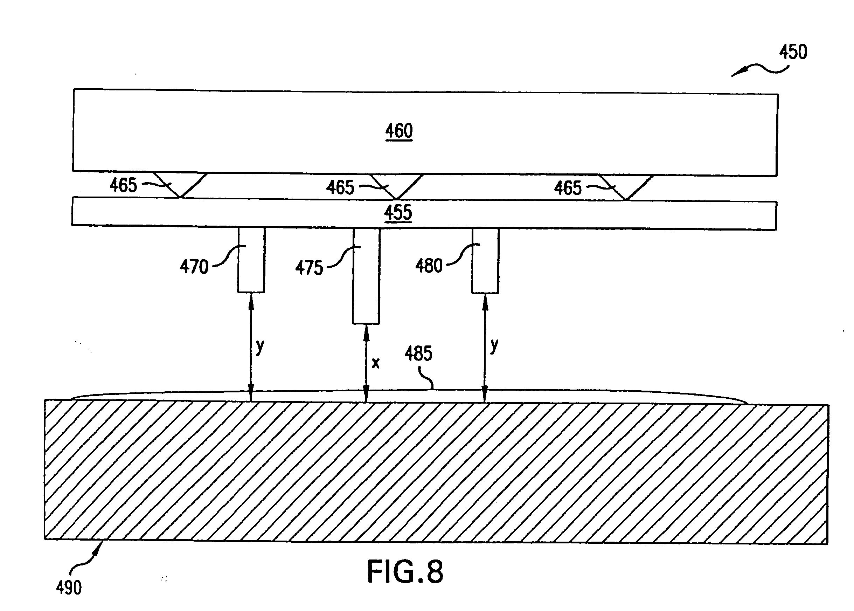

The first trench 352 may be formed by an ultrasonic grinding process, using a tool and machine to create trench 352 is depicted and described with respect to Fig. 8. Multiple tools are utilized to form a single through feature 360, so that ribs are formed in areas of substrate 350 over which tools are not positioned. Further, an abrasive material or slurry is used over all of first surface 354.

In the embodiment illustrated in Fig. 6B, trench 352 extends through approximately 50 percent of the thickness of the substrate 350 at positions indicated by the depth x. However, depths y, which correspond to areas above which tools are not positioned, are less than depth x and may be slightly less than approximately 50 percent of the thickness of the substrate 350. In embodiments where substrate 350 has a depth, between first side 354 and second side 358, of about 675 microns and the depth x is about at least 335 microns.

Fig. 6C shows a partially completed second trench 356 that is formed from the second side 358. In various embodiments, second trench 356 can be formed by removing substrate material through the second surface 358. In this example, reactant ion etching, which is one type of wet etching, can be used to form the second trench 356.

Other techniques for creating second trench 356 includes sand drilling which is a mechanical cutting process where target material is removed by particles, such as aluminum oxide, delivered from a high pressure air flow system. Other embodiments may use one or more of the following techniques to form the second trench: wet etching, dry etching, laser machining, sand drilling, abrasive jet machining, and mechanical machining, ultrasonic abrasive grinding and others. Mechanical machining can include the use of various saws and drills that spin and vibrate that are commonly used to remove substrate material.

Fig. 6D shows a finished second trench 356 having a length L₂. The trench intercepts or otherwise joins with a portion of the first trench 352. The combination of the two trenches forms a slot 320 that extends through the thickness of the substrate and through which a fluid such as fluid can flow. So for at least a portion of the substrate, the depths (x and y) of the two trenches, when taken together, equal the thickness t. As shown in the exemplary embodiment in Figs. 6A-6D, the second trench intercepts the entire length L₂ of the first trench. Other exemplary embodiments can have less than the entirety of the length of the first trench intercepted by the second trench.

The exemplary embodiment, shown in Fig. 6D, has a slot 360 formed from a first trench 352 having generally planar side walls and a second trench 356 having generally concave side walls. Further, ribs 365 are formed within slot 360 so that a number of sub-slot portions 370. The inclusion of ribs 365 strengthens the mechanical properties of substrate 350 so that the likelihood of breakage or deformation is reduced. The dimensions and geometric shapes of ribs 365 and sub-slot portions 370 may be materialized in order to optimize fluidic properties for slot 360 and the mechanical properties of substrate 350.

It should also be noted that ribs 365 need not evenly spaced from one another and may have different shapes as well.

Referring to Fig. 7, an ultrasonic grinding machine 400 according to one embodiment is illustrated. Ultrasonic grinding machine 400 includes a base 405 that is coupled to a driver apparatus 410 which may include a high frequency generator with an output greater than 500 watts that generates electrical high frequency energy at about 20 kHz. This energy is transferred to the transducer that converts into mechanical vibrating energy of same frequency which is transmitted to the tool via an easy running guide that is connected to the horn shaped sonotrodes 415. In certain embodiments sonotrodes 415 are comprised of Monel metals, which in one embodiment include silver corrosion-resistant alloys containing copper (28 per cent), nickel (67 per cent), and smaller quantities of such metals as iron, manganese, and aluminium. The sonotrodes serve to increase the oscillating amplitude on the front part of transducer with little or no loss and to transfer it to the actual tool which is mounted on the front of the sonotrodes. The number of sonotrodes can be singular or multiple depends on the application needs. The size, shape and the design of the sonotrode is created in a way that when combined with the actual tool and form a unit which can be tuned to the resonant frequency of the transducer. Driver apparatus is capable of vibrating sonotrodes 415 in such a way that base 405 vibrates in a direction substantially normal to its first surface 420.

Vibration of base 400 causes tools 425 that are coupled to it to also vibrate in a direction that is substantially normal to surface 435 of substrate 440. As tools 425 vibrate, while slurry 440 is provided to surface 435 of substrate 440, multiple features that are negative in sizes and shapes of the tool are formed in surface 435 in areas generally opposing the location of each the tools 425.

The profile of each tool 425 can be different than any of the other tools 425, as such each feature created may be different, or one or more of the features may be the same. Further, the number of tools 425 may vary depending on the number of features being formed, e.g. one or more.

In Fig. 7, each tool is shown as being a distance d from surface 430. The distance between the tool and the part surface 430 is generally between 0.013 mm to 0.063 mm. However, the distance d between one or more of the tools 425 may be different than the distance d between another tool(s).

In other embodiments, each tool 425 may be coupled to a different base, such that the frequency of vibration of each 425 can be different. In such embodiments, each tool is coupled to a base using a fastener.

An advantage of an ultrasonic grinding machine and processes utilizing the machine depicted in Fig. 7 is that a process that utilizes the machine is essentially independent of the number or geometry of the features being created. The number of tools 425 and their profile can vary without regard to any other features that are to be created. In this regard, the amount of time required multiple different features are substantially the same as the time required to create multiple similar features or a single feature.

Further, a single wafer from which multiple parts can be singulated can have features formed therein simultaneously, such that one or more features are formed in each part. In this way, one operation can form features in multiple parts at the same time. After the operation, the wafer can be singulated so that multiple parts are available.

It should be noted that in certain embodiments, first trench 302 and second trench 306 may be formed by any different method, and then an ultrasonic grinding technique may be used to singulate part in which the feature is being created.

Referring to Fig. 8, a portion of an ultrasonic grinding machine according to another embodiment. A portion of ultrasonic grinding machine 450 includes a base 455 that is coupled to a driver apparatus 460. Further, energy is transferred from a transducer in driver apparatus to the tools 470, 475, and 480 via an easy running guide that is connected by horn shaped sonotrodes 465.

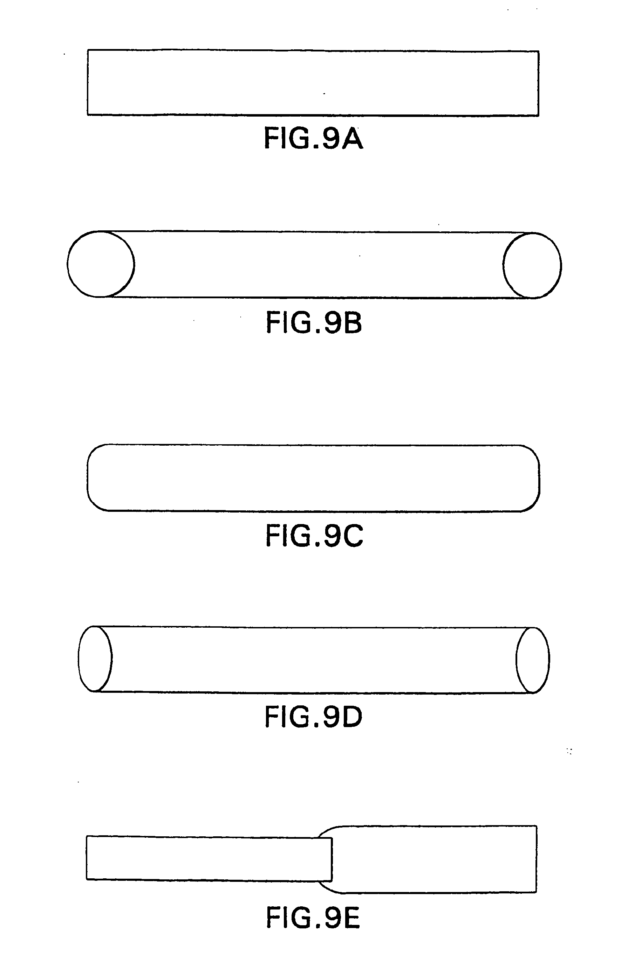

Tools 470 and 480 are a first distance y from a surface of substrate 490, while tool 475 is a second distance x, which is less than distance y, from the surface of substrate. The distances x and y determine the height of ribs, e.g. ribs 365, that are formed in the slot. That is: The size and the shape of the tool is inverse of the desired feature produced. Further, in some embodiments, first distance y and second distance x may be the same. In addition, tools 470, 475, and 480 may have tapered portions and straight portions (Fig. 9E).

An abrasive material or slurry 485 is applied to the surface while tools 470, 475, and 480 are being vibrated. Ultrasonic grinding machine 450 operates according to the same parameters and features as described with respect to Fig. 7.

While Fig. 8 depicts three tools 470, 475 and 480 to form a slot, and their dimensions, is a function of the desired number of ribs 365 (Figs. 6A-6D). Further, multiple groups of tools may be utilized on a single base 455 so that multiple slots with ribs may be formed.

Referring to Figs. 9A-9E, exemplary profiles of tools that may be utilized with an ultrasonic grinding machine according to several embodiments are provided. It should be noted that the profile of the feature that is formed by the tools depicted in Figs. 9A-9D is substantially inverse with respect to the profile of the tools.

The tools may have square ends (Fig. 9A), circular ends (Fig. 9B), chamfered ends (Fig. 9C), and/or oval ends (Fig. 9D). In addition, other end profiles may be utilized. Further, one of each tool may have a different profile for each end as desired.

Referring to Fig. 9E, it is also possible for a tool to have a profile that varies in shape along its length. In Fig. 9E, the tool has a substantially square cross-section for a first portion of its length and a substantially triangular cross-section for a second portion of its length. By utilizing this type of tool profile, the geometry of a feature created by the tool along the depth of the feature. In the case where the feature is a fluid handling slot a tapered first or second side can be created depending on the desired profile.

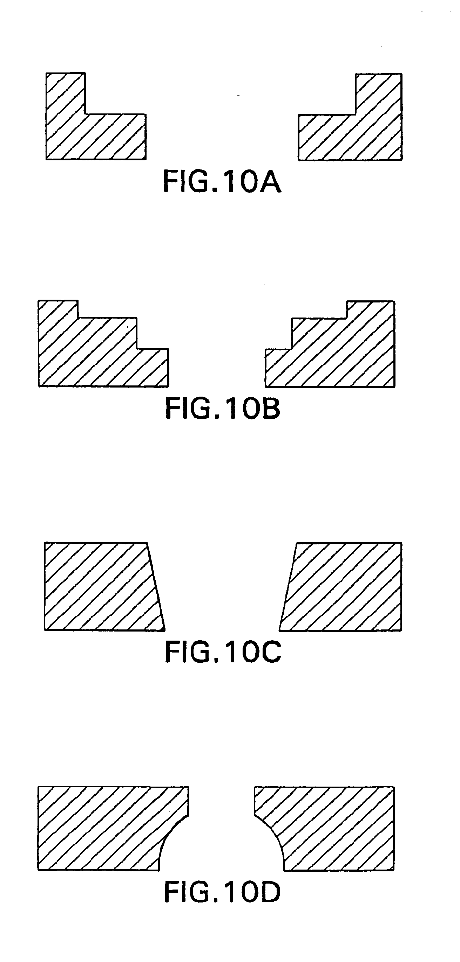

Referring to Figs. 10A-10D, cross-sectional views of through features, e.g. fluid handling slots, are illustrated. Fig. 10A depicts a through feature having two different widths along its length, while Fig. 10B depicts a through feature that is stepped, where the width increases along a length of the through feature in one direction. Fig. 10C depicts a tapered profile for a slot wall that may be formed using a tapered tool profile, e.g. the tool depicted in Fig. 10E. Fig. 10D depicts a through feature having a partially conical cross-section that tapers to a substantially square cross-section.

Other feature profiles that may be formed based upon different tools include, but are not limited to, slots that have a square cross-section and substantially a same width for an entire depth, slots that have walls that are tapered along all or some of depth of the substrate, and slots that have two tapered and two substantially straight opposing walls along the depth. In addition, each of the profiles may have square, semi-circular, circular, chamfered, or oval openings at the first and/or second sides of the substrate.

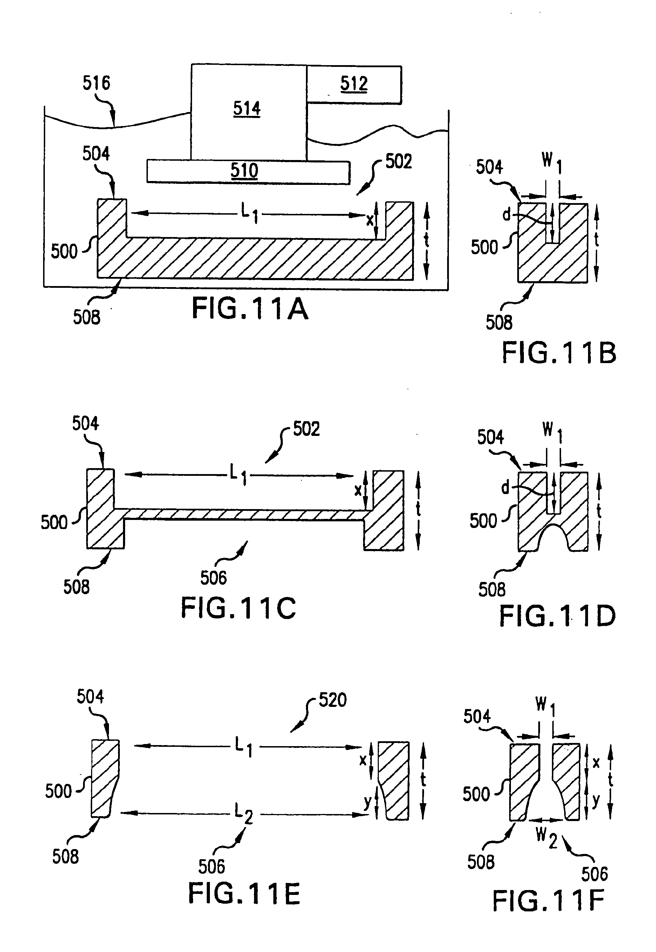

Referring to Figs. 11A-11 F, a process of forming a feature according to additional embodiments is illustrated. A through feature can comprise a first trench 502 that originates from a first side 504 of the substrate 502, and a second trench 506 (shown Fig. 11 C) that originates from the second side 508. For ease of viewing these trenches, are shown in corresponding pairs. For example, Fig. 11A is a portion of a cross-section of a feature, and shows a length L₁ and depth x of the first trench. Fig. 11 B is a portion of a cross section substantially orthogonal to the view shown in Fig. 11A and shows a width w₁ of the trench 502 and the same depth x shown in Fig. 11A of the first trench 502.

The first trench 502 is formed by electron discharge machining process. In the embodiments of Figs. 11A-11F, an electrode 510, which has a shape and size that is inverse in terms of the size and shape of the desired feature, is provided into substrate 500 in a position where first feature 502 is to be formed. Electrode 510 is driven by a servo-motor 512 via a ram 514. Electrode 510 may comprise any number of electrically conductive materials including, but not limited to, graphite, copper, copper-tungsten, silver-tungsten, brass, steel, carbide, and tungsten. In other embodiments, electrode 510 may be replaced by a strand of wire, which in certain embodiments may have a diameter of between 0.025 to 0.13 millimeters.

To form first feature 502, substrate 500 may be immersed in a dielectric fluid 516 or have a dielectric fluid applied to first surface 504 as first feature 502 is being formed. A current or other electrical signal is applied to electrode 510 that discharges electrical energy, e.g. sparks, at a tip of electrode 510. The electrical energy causes substrate 500 to melt near the point of contact with the tip of electrode 510. As ram 514 forces electrode 510 into substrate 500 feature 502 is formed to the desired depth x.

In the embodiment illustrated in Fig. 11A, trench 502 extends through approximately 50 percent of the thickness of the substrate 500 as indicated by the depth x. In embodiments where substrate 500 has a depth, between first side 504 and second side 508, of about 675 microns depth x is about at least 335 microns.

In the illustrated embodiments, the length L₁ lies along a first axis of the trench and the width lies along second axis, transverse the first axis. Figs. 11C and 11D and Figs. 11E and 11 F have similar relationships to Figs. 11A and 11 B showing corresponding cross sections of the length and width.

Fig. 11C shows a partially completed second trench 506 that is formed from the second side 508. In various embodiments, second trench 506 can be formed by removing substrate material through the second surface 508. In this example, reactant ion etching, which is one type of wet etching, can be used to form the second trench 506.

Other techniques for creating second trench 506 includes sand drilling which is a mechanical cutting process where target material is removed by particles, such as aluminum oxide, delivered from a high pressure air flow system. Other embodiments may use one or more of the following techniques to form the second trench: wet etching, dry etching, laser machining, sand drilling, abrasive jet machining, and mechanical machining, ultrasonic abrasive grinding and others. Mechanical machining can include the use of various saws and spinning and vibrating drills that are commonly used to remove substrate material.

Figs. 11E-11F show a finished second trench 506 having a length L₂, a width W₂ and a depth y. The trench intercepts or otherwise joins with a portion of the first trench. The combination of the two trenches forms a slot 520 that extends through the thickness of the substrate and through which a fluid such as fluid can flow. So for at least a portion of the substrate, the depths (x and y) of the two trenches, when taken together, equal the thickness t. As shown in this exemplary embodiment and as best viewed in Fig. 11E, the second trench intercepts the entire length L₂ of the first trench. Other exemplary embodiments can have less than the entirety of the length of the first trench intercepted by the second trench. Additionally, as can be appreciated from Fig. 11E, the second trench can be longer than the first trench so that it encompasses a portion of the first trench for its entire length within the second trench.

The exemplary embodiment, shown in Fig. 11 F, has a slot 520 formed from a first trench 502 having generally planar side walls and a second trench 506 having generally concave side walls. In this exemplary embodiment, the maximum width W₂ of the first trench is less than the maximum width W₂ of the second trench. Other embodiments can utilize different configurations.

Although the described embodiments illustrate only removing material from the substrate to form the desired trenches, intermediate steps in some embodiments can actually add material to the substrate. For example, materials might be deposited, through deposition techniques, as part of the slot formation sequence and then be either partially or completely removed.

Another additional procedure, such as reactive ion etching, can be utilized to polish the slot wall surface and further release residue stresses to strengthen the substrate 500 after both first trench 502 and second trench 506 are formed. In addition, this wet etch process can be utilize to taper the edges of the feature at second surface 508 in order to reduce the likelihood of chipping and potential blockage of the slot or portions thereof.

Alternative approaches to forming first trench 502 include applying wet etch on first side 504 prior to forming first trench by applying a wet etch, whereby second trench 506 is formed by electron discharge machining. Such approaches produce edges for first trench 502 that can have a minimized risk of chipping. Another approach may include applying a wet etch on second side 508 followed by ultrasonic from either first side 504 or second side 508 to fully form feature 520. This approach produces a tapered trench on second side 508 to make substrate 500 more flexible and easier to bend toward first side 504 without cracking the substrate 500 or a film formed on the substrate 500.

In embodiments where second trench 506 is formed by dry etching, first trench 502 is formed as described with respect to Figs. 11A-11D such that depth d approximately 90% of the total thickness t of substrate 500. Then a dry etching process may be utilized to create second trench 506.

In embodiments where second trench 506 is formed by laser machining, sand drilling, abrasive jet machining, or mechanical machining, ultrasonic grinding can be utilized to form first trench 502 after wet etching one or both first side 506 and second side 508 prior to forming first trench 502 or second trench 506.

A further approach may include applying a wet etch on both first side 504 and second side 508 to define trenches, that have a lesser depth than those of trenches 502 and second trench 506, and then electrical discharge machining through either of the trenches to form a through feature. This will produce an optical front edge and tapered slot walls.

It should be noted that while Figs. 11A-11F refer to a first trench 502 and a second trench 506 the order of the manufacturing of the trenches need not follow this order. Further, both first side 504 and second side 508 can have integrated circuits or other devices formed on the surface prior to formation of first trench 502 and second trench 506.

In addition, while Figs. 11A-11F shows the formation of a first trench 502 and a second trench 506 to form a through feature 520, the through feature 520 may be formed by forming a first trench 502 as described with respect to Figs. 11A and 11 B that is formed to the full depth of substrate 500 through both first side 504 and second side 508.

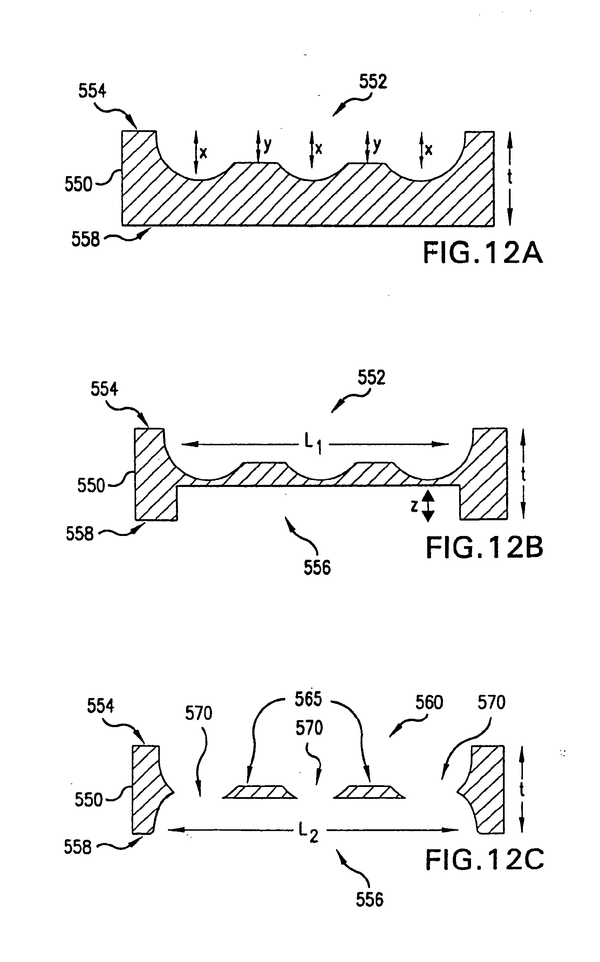

Referring to Figs. 12A-12C a process of forming a feature according to yet further embodiments is illustrated. In Figs. 12A-12C, a through feature is formed by electron discharge machining process as described with respect to Figs. 11 A-11 F. A difference in the process for Figs. 12A-12C being that multiple electrodes (not shown: with size and shape inverse to the size and shape of desired feature) that utilize smaller sizes are used to form a through feature 560.

In the embodiment illustrated in Fig. 12A, trench 552 extends through approximately 50 percent of the thickness of the substrate 550 at positions indicated by the depth x. However, depths y, which correspond to areas above which tools are not positioned, are less than depth x and may be slightly less than approximately 50 percent of the thickness of the substrate 550. In embodiments where substrate 550 has a depth, between first side 554 and second side 558, of about 675 microns and the depth x is about at least 335 microns.

Fig. 12B shows a partially completed second trench 556 that is formed from the second side 558. In various embodiments, second trench 556 can be formed by removing substrate material through the second surface 558. In this example, reactant ion etching, which is one type of wet etching, can be used to form the second trench 556.

Other techniques for creating second trench 556 includes sand drilling which is a mechanical cutting process where target material is removed by particles, such as aluminum oxide, delivered from a high pressure air flow system. Other embodiments may use one or more of the following techniques to form the second trench: wet etching, dry etching, laser machining, sand drilling, abrasive jet machining, and mechanical machining, and others. Mechanical machining can include the use of various saws and drills that spin and vibrate that are commonly used to remove substrate material.

Fig. 12C shows a finished second trench 556 having a length L₂. The trench intercepts or otherwise joins with a portion of the first trench 552. The combination of the two trenches forms a slot 560 that extends through the thickness of the substrate and through which a fluid such as fluid can flow. So for at least a portion of the substrate, the depths (x and y) of the two trenches, when taken together, equal the thickness t. As shown in the exemplary embodiment in Figs. 12A-12C, the second trench intercepts the entire length L₂ of the first trench. Other exemplary embodiments can have less than the entirety of the length of the first trench intercepted by the second trench.

The exemplary embodiment, shown in Fig. 12C, has a slot 560 formed from a first trench 352 having generally planar side walls and a second trench 556 having generally concave side walls. Further, ribs 565 are formed within slot 560 so that a number of sub-slot portions 570. The inclusion of ribs 565 strengthens the mechanical properties of substrate 550 so that the likelihood of breakage or deformation is reduced. The dimensions and geometric shapes of ribs 565 and sub-slot portions 570 may be materialized in order to optimize fluidic properties for slot 560 and the mechanical properties of substrate 550.

It should also be noted that ribs 565 need not evenly spaced from one another and may have different shapes as well.

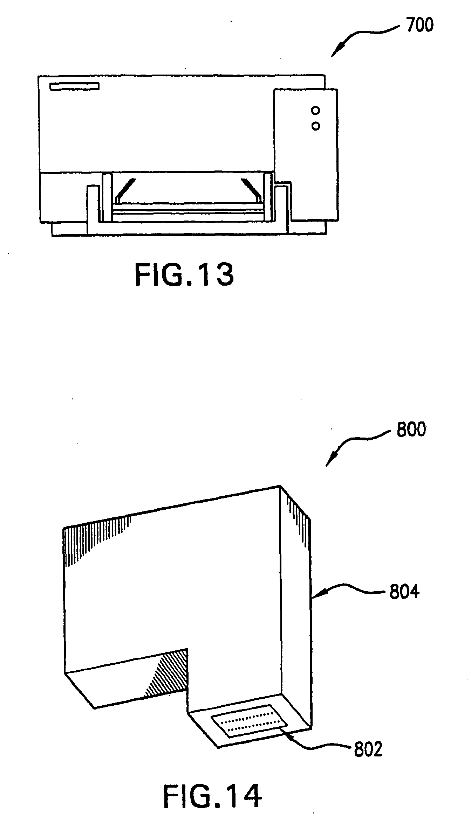

Figs. 13 and 14 illustrate examples of products which can be produced utilizing at least some of the described embodiments. Fig. 13 shows a diagrammatic representation of an exemplary printing device that can utilize an exemplary print cartridge. In this embodiment the printing device comprises a printer 700. The printer shown here is embodied in the form of an inkjet printer. The printer 700 can be capable of printing in black-and-white and/or in color. The term "printing device" refers to any type of printing device and/or image forming device that employs slotted substrate(s) to achieve at least a portion of its functionality. Examples of such printing devices can include, but are not limited to, printers, facsimile machines, and photocopiers. In this exemplary printing device the slotted substrates comprise a portion of a printhead which is incorporated into a print cartridge, an example of which is described below.

Fig. 14 shows a diagrammatic representation of an exemplary print cartridge 800 that can be utilized in an exemplary printing device. The print cartridge is comprised of a printhead 802 and a cartridge body 804 that supports the printhead. Though a single printhead 802 is employed on this print cartridge 800 other embodiments may employ multiple printheads on a single cartridge.

Print cartridge 800 is configured to have a self-contained fluid or ink supply within cartridge body 804. Other print cartridge configurations alternatively or additionally may be configured to receive fluid from an external supply. Other exemplary configurations will be recognized by those of skill in the art.

Although the inventive concepts have been described in language specific to structural features and methodological steps, it is to be understood that the appended claims are not limited to the specific features or steps described. Rather, the specific features and steps are disclosed as preferred forms of implementing the inventive concepts.

## Claims

1. A method of forming fluid handling slots in a semiconductor substrate defined by a first side and a second side, the method comprising:
repeatedly applying an electric energy discharge at a first side of semiconductor substrate to form a first feature; and,
removing semiconductor substrate material from the backside to form a second feature, wherein at least a portion of the first and second features intersect to form a through feature through the semiconductor substrate.

2. The method of claim 2 wherein the through feature is a slot.

3. The method of claim 2 wherein the first feature has a first depth from the first side and the first depth is at least one half the thickness of the substrate between the first side and the second side.

4. The method of claim 2 wherein the second feature has a depth of approximately one hundred microns and a thickness of the substrate is approximately six hundred seventy five microns

5. The method of claim 2 wherein the second feature has a depth of at least fifty microns and a thickness of the substrate is about six hundred seventy five microns.

6. The method of claim 2 wherein removing semiconductor substrate occurs prior to repeatedly applying the energy discharge.

7. The method of claim 2 wherein repeatedly applying the energy discharge comprises applying an electric spark to form the first feature.

8. A method of forming a fluid feature in a semiconductor substrate, comprising:
applying an abrasive material to a first surface of the substrate; and
vibrating a plurality of tools each at a different position along the first surface, each of the plurality of tools vibrating at a rate and a distance from the first surface to form a plurality of features in the first surface.

9. The method of claim 8 wherein the frequency is between approximately nineteen kilohertz and approximately twenty five kilohertz.

10. The method of claim 8 wherein the distance is between approximately thirteen microns and approximately one hundred microns.

11. The method of claim 8 wherein each tool has as a profile that is an inverse to the profile of a corresponding feature.

12. The method of claim 11 wherein the profile of one tool of the plurality of tools is different than the profile of another tool of the plurality of tools.

13. The method of claim 8 wherein a feature formed by one tool of the plurality of tools is different than a feature formed by another tool of the plurality of tools.

14. A method of forming a plurality of features in a semiconductor substrate, comprising:
applying an abrasive slurry material to a first surface of the substrate; and
vibrating a plurality of tools that is immersed in the slurry, at different positions substantially opposing the first surface, each of the plurality of tools vibrating at a rate and a distance from the first surface to each form a feature in the first surface.

15. The method of claim 14 wherein the frequency of one tool of the plurality of tools is different than the frequency of another tool of the plurality of tools.

16. The method of claim 14 wherein the frequency of one tool of the plurality of tools is between approximately nineteen kilohertz and approximately twenty five kilohertz.

17. The method of claim 14 wherein the distance from one tool of the plurality of tools to the first surface is different than the distance from the first surface of another tool of the plurality of tools.

18. The method of claim 14 wherein the distance from one tool of the plurality of tools to the first surface is between approximately thirteen microns and approximately one hundred microns.

19. The method of claim 14 further comprising providing a wax support at a second surface of the substrate, wherein the second surface substantially opposes the first surface.

20. The method of claim 14 wherein one tool of the plurality of tools has a profile that is different than another tool of the plurality of tools.

21. The method of claim 14 wherein the feature formed by one of the plurality of tools is different than the feature formed by another of the plurality of tools.

22. The method of claim 61 wherein removing comprises a method selected from the group consisting of wet etching, dry etching, laser machining, sand drilling, abrasive jet machining, spinning and vibrating drill, saw cutting and mechanical machining.

23. An apparatus for forming features in a semiconductor substrate comprising:
a base capable of being vibrated at a rate;
a plurality of tools each coupled to the base; and
a singular sonotrode coupled to the tools base; and
a plurality of sonotrodes each coupled to the tools base; and
a plurality of sonotrodes each coupling one of the tools to the base,
wherein during vibration of the base each tool of the plurality of tools forms a feature in the semiconductor substrate that has a profile that is inverse to the tool.

24. The apparatus of claim 23 wherein each tool is fabricated from a metal or metal alloy.

25. The apparatus of claim 24 wherein the metal is selected from a group consisting of low-carbon or stainless steel.

26. The apparatus of claim 23 wherein each sonotrode is fabricated from a monel metal.

27. The apparatus of claim 23 wherein each sonotrode is substantially horn shaped.
